# FASCICULE DE BREVET EUROPEEN

(11) **EP 4 219 340 B1**
(45) Date de publication et mention de la délivrance du brevet: **05.03.2025**
(21) Numéro de dépôt: 23151592.5
(22) Date de dépôt: 13.01.2023
(51) Int. Cl.: B65F 1/10, E04B 1/343, E04B 1/344, E04B 1/348

(54) **MODULE D'ASSEMBLAGE POUR UNE INSTALLATION DE DÉCHÈTERIE, INSTALLATION ET PROCÉDÉ DE MONTAGE SUR LA BASE D'UN TEL MODULE**
MONTAGEMODUL FÜR EINE ABFALLENTSORGUNGSANLAGE, ANLAGE UND MONTAGEVERFAHREN AUF DER BASIS EINES SOLCHEN MODULS
ASSEMBLY MODULE FOR A WASTE DISPOSAL INSTALLATION, INSTALLATION AND ASSEMBLY METHOD BASED ON SUCH A MODULE

(30) Priorité: 14.01.2022 FR 2200308
(43) Date de publication de la demande: 02.08.2023
(73) Titulaire: Descours, Marc, 34160 Saint Bauzille de Montmel (FR)
(72) Inventeur: Descours, Marc, 34160 Saint Bauzille de Montmel (FR)
(74) Mandataire: Tzeuton Tchangoum, Eric Olivier

(56) Documents cités:
- EP-A1- 3 712 357
- FR-A1- 2 763 051
- FR-A1- 2 865 666
- US-A1- 2014 000 183
- US-A1- 2018 248 508

## Description

La présente invention concerne un module d'assemblage pour une installation de déchèterie du type à plateforme surélevée, permettant d'y intégrer une récupération d'énergie électrique par voie photovoltaïque et d'eau de pluie. L'invention concerne en outre une installation et un procédé sur la base d'un tel module d'assemblage.

Les réglementations obligent généralement les collectivités locales à prévoir des sites de collecte des déchets volumineux non conteneurisables en porte à porte. Ainsi, les collectivités recourent souvent à des centres d'apports volontaires, dénommés en France « déchèteries », généralement de grande capacité. Ces déchèteries comportent le plus souvent une plateforme surélevée équipée de rampes inclinées permettant de disposer des bennes de collecte en contrebas de la plateforme, de façon à permettre aux apporteurs de trier leurs déchets volumineux en les déversant en contrebas dans les bennes appropriées à chaque nature de déchets. Cela permet également de faciliter la dépose et l'enlèvement des bennes de collecte par des camions roulant au niveau du sol.

Malheureusement, l'évolution rapide des zones urbanisées rend difficile les anticipations des besoins à long terme, la recherche de terrains appropriés et le moment opportun de montage d'installations de déchèteries.

Par ailleurs, le voisinage des installations de déchèteries est souvent opposé à leurs mises en place, en invoquant l'occupation conséquente d'un terrain, avec un impact écologique notamment sur l'écosystème et la biodiversité, ainsi que des nuisances sonores.

Ainsi, les installations de déchèteries de type évolutives, voire déplaçables sont généralement très appréciées. A cet effet, des installations de type modulaires ont été proposées, par exemple dans le brevet FR2706791B1. En effet, elles permettent de mettre en place une déchèterie de manière rapide en limitant le besoin de différents corps de métiers de bâtiments-travaux public, et permettre leur évolution en taille dans le temps à moindre frais, voire leur relocalisation si de besoin.

Depuis de nombreuses années le recours à la récupération d'énergie électrique par voie photovoltaïque est en forte progression ; ainsi un très grand nombre de toitures tant privées que publiques sont dotées de ce type de récupération, et l'on voit également de grandes surfaces de capteurs se développer sur des terrains isolés en d'immenses champs solaires.

Néanmoins des règles strictes de type réglementaire, encadrent et limitent le développement de ces infrastructures, par exemple pour éviter qu'elles n'empiètent sur des surfaces arables destinées aux cultures vivrières, ou ne se situent trop près des zones fortement urbanisées.

Les déchèteries, pour des raisons liées aux nuisances évoquées précédemment, sont elles-mêmes installées généralement sur des parcelles non dévolues aux cultures, et généralement relativement éloignées des habitations, mais par contre disposent d'une infrastructure d'accessibilité de bonne qualité, et d'un personnel de gestion bien formé.

La raréfaction de la ressource en eau sur toute la planète est devenue une évidence. Ceci conduit les gouvernements à encourager les économies en eau, et à promouvoir les techniques de récupération des eaux de pluie, notamment dans le but d'épargner les ressources en eau pour des usages comme l'irrigation, ou le lavage d'installations.

Or, les déchèteries bénéficient généralement d'un environnement paysager destiné à mieux les inscrire dans le paysage, ce qui implique des surfaces parfois conséquentes pourvues de végétaux à irriguer. Par ailleurs, s'agissant d'accueil de déchets en grande quantité, l'exploitation du site implique un nettoyage régulier des installations afin d'accueillir les visiteurs et permettre le travail des agents dans des conditions correctes de salubrité.

En utilisation, un personnel de déchèteries est présent sur plusieurs postes pour l'accueil du public, et des contrôles ou vérifications. Des marches et stations debout sont requises à cet effet. Malheureusement, dans le cas de forts ensoleillements, le travail du personnel de déchèteries implique une pénibilité significative en raison de l'ensoleillement ajouté aux sollicitations musculaires du personnel.

Un premier objectif est d'améliorer significativement l'impact écologique de l'installation de déchèterie en rajoutant des fonctionnalités énergétiques et de récupération d'eau de pluie.

Un deuxième objectif est d'intégrer dans la structure même des éléments d'une installation de déchèteries, des éléments porteurs et des surfaces de captation d'énergie photovoltaïque et de recueil des eaux de pluie, tout en restant dans l'épure de l'installation, et sans recours à des piliers ou éléments porteurs extérieurs au quai qui gêneraient notamment au niveau du maniement des bennes à déchets.

Un troisième objectif de la présente invention est de limiter la pénibilité au travail du personnel de déchèteries sur une installation de déchèterie de type modulaire.

Pour atteindre ces objectifs, l'invention propose un module d'assemblage pour une installation de déchèterie, le module d'assemblage comprenant une structure de plateforme surélevée, quel que soit son matériau constitutif, et des moyens d'assemblage configurés pour permettre l'assemblage de plusieurs modules d'assemblage pour former une installation de déchèterie. L'installation de déchèterie ainsi formée est complétement solidarisée et à forte inertie structurelle.

Selon un aspect, ledit module d'assemblage comporte une structure d'ombrière montée sur un ou plusieurs piliers solidaires de la structure de plateforme, et la structure d'ombrière comporte
- un ou plusieurs panneaux photovoltaïques associés à une installation électrique pour récupérer de l'énergie électrique par voie photovoltaïque, et/ou
- un ou plusieurs moyens de récupération d'eau pour récupérer de l'eau de pluie ou de nettoyage ruisselant sur la structure d'ombrière,
et les moyens d'assemblage sont configurés pour former un assemblage des modules solidarisé, à l'épreuve des effets des sollicitations du vent sur ladite structure d'ombrière. En particulier, les modules assemblés constituent une plateforme solidarisée et à forte inertie.

Avantageusement, la structure d'ombrière permet de prévoir des zones ombragées et donc de limiter la pénibilité du personnel de déchèterie sur une installation de déchèterie de type modulaire, lors de périodes de fort ensoleillement, tout en améliorant le confort des usagers, et sur l'extérieur, protéger de la pluie certains déchets stockés en bennes.

En outre, l'assemblage desdits modules incluant la structure d'ombrière permet un montage facilité et en toute compatibilité avec le reste des éléments de l'installation de déchèterie, constituant ainsi un ensemble solidarisé à forte inertie, susceptible d'apporter une stabilité très forte résistant aux forces émanant des sollicitations du vent sur les ombrières.

Ainsi, les panneaux photovoltaïques et la récupération d'eau de pluie permettent d'améliorer significativement l'impact écologique de l'installation de déchèterie initialement dévolue uniquement au tri sélectif des déchets encombrants.

Selon d'autres aspects pris isolément ou combinés suivant toutes les combinaisons techniquement réalisables :
- les piliers sont sous forme de profilés creux, ou en H ; et/ou
- la structure de plateforme surélevée comporte des profilés creux métalliques ; et/ou
- la structure d'ombrière est configurée pour coulisser le long des piliers, le module d'assemblage comportant un mécanisme de levage de la structure d'ombrière ; et/ou
- le module d'assemblage a deux piliers et la structure d'ombrière est agencée en deux volets situés de part et d'autre d'une goulotte centrale servant de gouttière, sur laquelle ils sont fixés, laquelle goulotte reliant longitudinalement les deux piliers, et coulissant verticalement le long des piliers, l'un des volets couvrant la structure de plateforme, l'autre couvrant une section de contrebas recevant une benne, et de préférence pour certaines structures d'ombrière, situées en angle, l'un des volets présente une dimension et une surface inferieure évitant le chevauchement avec le volet en vis-à-vis d'une autre structure d'ombrière la plus proche ; et/ou
- la structure d'ombrière est configurée pour être disposée de manière oblique par rapport à l'horizontale et audit un ou plusieurs piliers, le module d'assemblage comportant une platine de maintien fixée à la structure d'ombrière au niveau dudit un ou plusieurs piliers, et au moins un câble de maintien fixé à la platine de maintien et à au moins une extrémité de la structure d'ombrière ; et/ou
- les moyens de récupération d'eau comprennent une ou ladite gouttière au centre de la structure d'ombrière, associée à au moins une canalisation descendante de récupération ; et/ou
- le module d'assemblage comprend des moyens d'éclairage montés sur la structure d'ombrière.

L'invention concerne en outre un kit de montage d'une installation de déchèterie, comprenant des modules d'assemblage incluant au moins un module d'assemblage selon l'invention, configuré pour être assemblé avec au moins un autre module d'assemblage du même type et/ou au moins un autre module d'assemblage de type différent.

Un autre objet de l'invention concerne une installation de déchèterie comprenant des modules d'assemblage incluant au moins un module d'assemblage selon l'invention, assemblé avec au moins un autre module d'assemblage du même type et/ou au moins un autre module d'assemblage de type différent.

L'invention porte en outre sur un procédé de montage d'une installation de déchèterie, comprenant des étapes d'assemblage d'au moins un module d'assemblage selon l'invention, avec au moins un autre module d'assemblage du même type et/ou au moins un autre module d'assemblage de type différent.

L'invention sera davantage détaillée par la description de modes de réalisation non-limitatifs, et sur la base des figures annexées, parmi lesquelles :

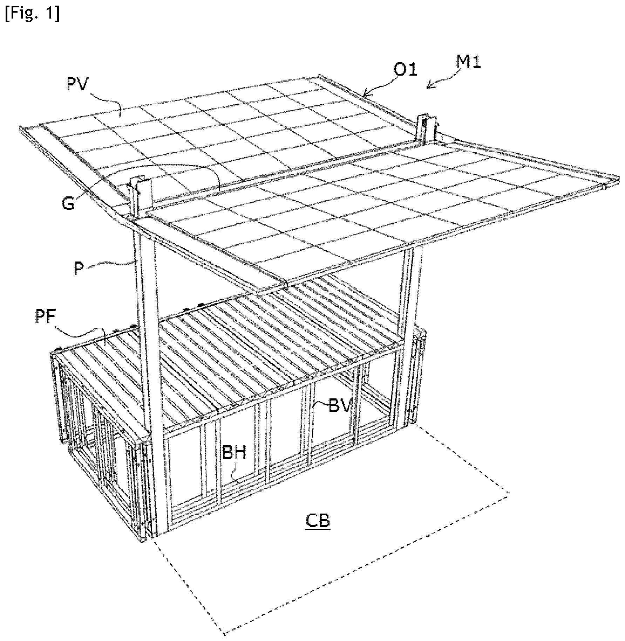

- [Fig.1] la figure 1 illustre schématiquement une vue dans l'espace d'un module d'assemblage selon une variante préférée de l'invention, illustrant le dessus dudit module ;

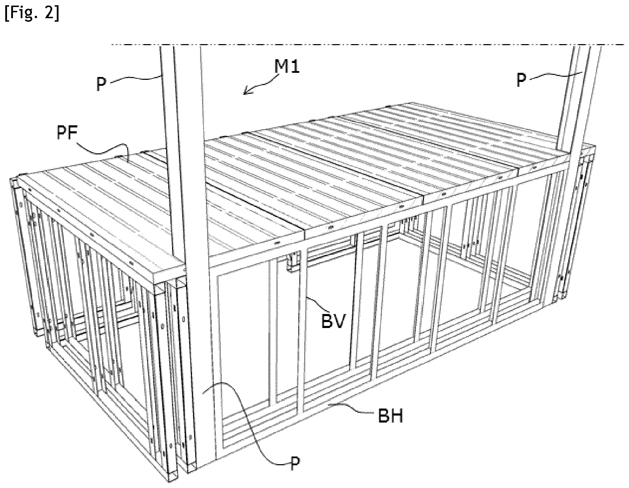

- [Fig.2] la figure 2 illustre schématiquement une vue rapprochée du module d'assemblage de la figure 1 ;

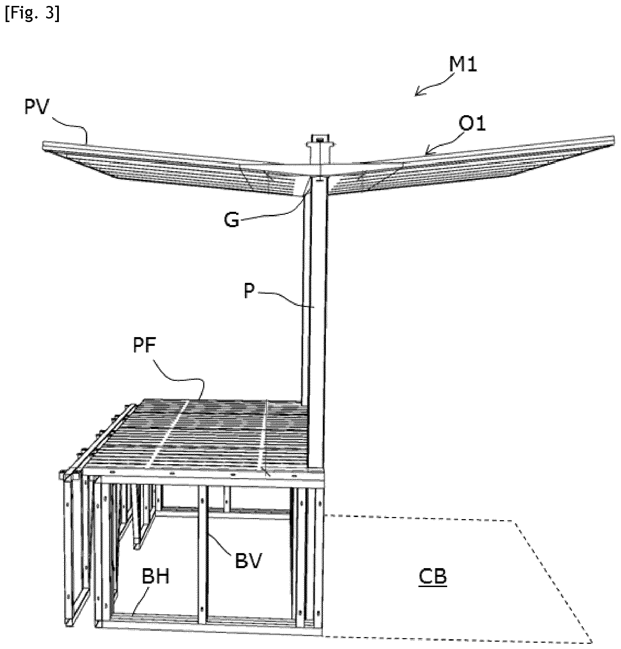

- [Fig.3] la figure 3 illustre schématiquement une vue similaire à celle de la figure 1, illustrant un côté dudit module d'assemblage ;

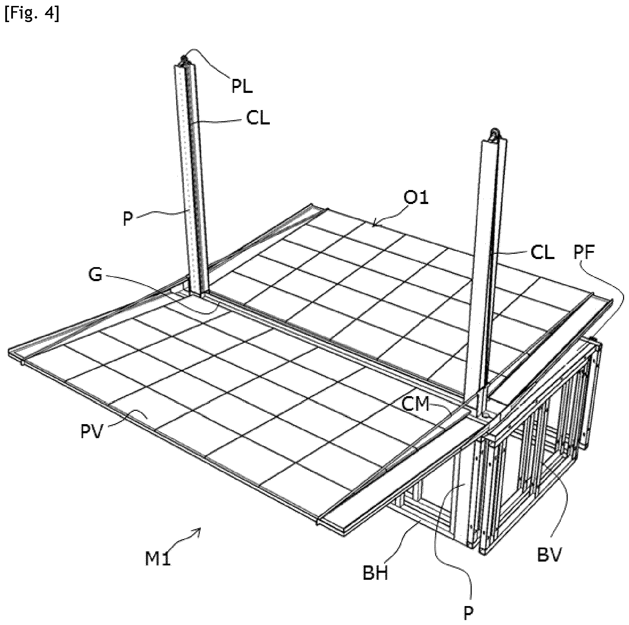

- [Fig.4] la figure 4 illustre schématiquement un abaissement d'une structure d'ombrière dans une variante du module d'assemblage selon l'invention ;

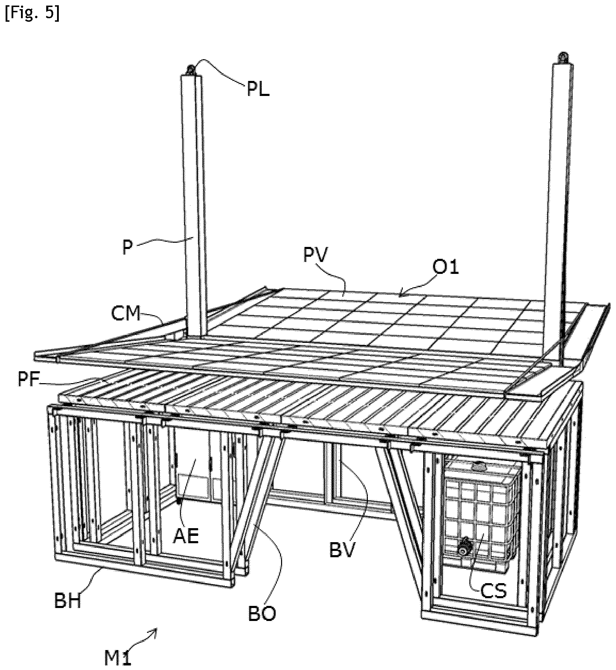

- [Fig.5] la figure 5 illustre schématiquement une autre vue dans l'espace de la variante de la figure 4 ;
- [Fig.6] la figure 6 illustre schématiquement une première variante de moteur de levage du module d'assemblage des figures 4 et 5 ;
- [Fig.7] la figure 7 illustre schématiquement une deuxième variante de moteur de levage du module d'assemblage des figures 4 et 5 ;
- [Fig.8] la figure 8 illustre schématiquement des détails d'un mécanisme de levage pour un module d'assemblage selon les figures 4 et 5 ;

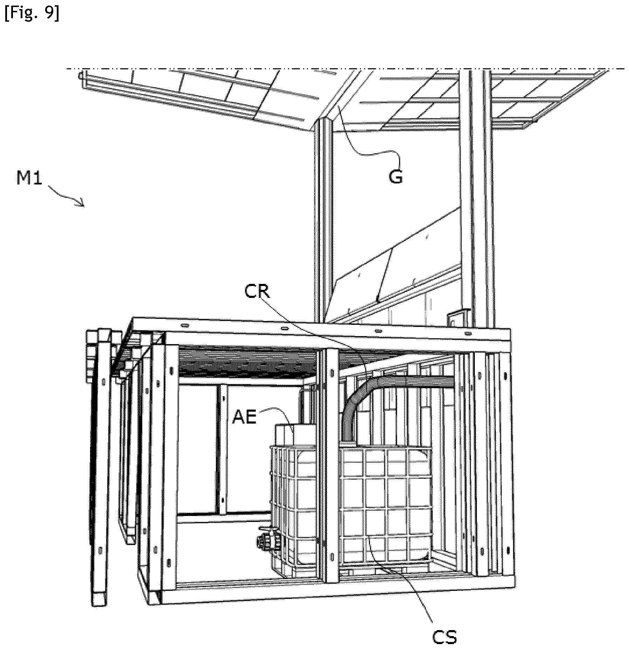

- [Fig.9] la figure 9 illustre schématiquement des détails d'un système de récupération d'eau d'un module d'assemblage selon l'invention ;
- [Fig.10] la figure 10 illustre une vue dans l'espace d'une première partie d'assemblage de plusieurs modules d'assemblage pour former l'installation de déchèterie selon l'invention ;
- [Fig.11] la figure 11 illustre une vue dans l'espace d'une deuxième partie d'assemblage de plusieurs modules d'assemblage pour former l'installation de déchèterie selon l'invention ;
- [Fig.12] la figure 12 illustre une vue dans l'espace d'une installation de déchèterie comprenant notamment plusieurs modules d'assemblage selon l'invention ; et
- [Fig.13] la figure 13 illustre schématiquement des détails de structures d'ombrière évitant un recouvrement partiel en angle d'une installation.

L'invention a trait à un module d'assemblage M1 pour une installation de déchèterie du type à plateforme surélevée.

Le module d'assemblage M1 comprend une structure de plateforme PF surélevée, similaire aux plateformes généralement proposées dans le domaine. La structure de plateforme PF a de préférence une forme prismatique à base polygonale, en particulier une forme cubique ou plus préférentiellement parallélépipédique comme illustré dans les figures.

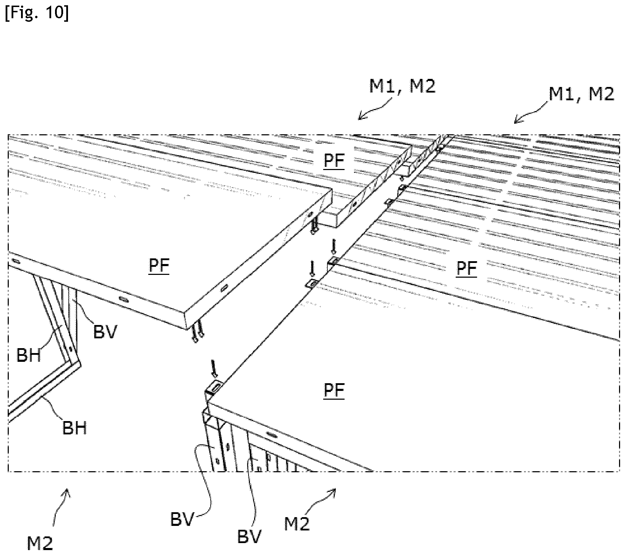

Le module d'assemblage M1 comprend en outre des moyens d'assemblage configurés pour permettre l'assemblage de plusieurs modules d'assemblage ensemble pour former une installation de déchèterie. Les moyens d'assemblage se définissent comme tout élément du module permettant une fixation mécanique à un autre module du même type, c'est-à-dire un autre module d'assemblage M1 ; et/ou à un autre module d'assemblage de type différent tel que les modules d'assemblage M2 et M3 illustrés en figures 10 à 12.

En particulier, le module d'assemblage M1 comprend des profilés creux, par exemple métalliques, formant des moyens d'assemblage, notamment par fixation au travers des profilés creux. La fixation des modules d'assemblage M1 peut être faite par des trous prévus dans les profilés et/ou des perçages des profilés.

Plus généralement, la structure de plateforme PF surélevée comporte des profilés creux métalliques. On peut définir des bras, ou tirants par exemple en profilés métalliques, horizontaux BH, verticaux BV et obliques BO formant une armature de la structure de plateforme PF. La figure 10 illustre des exemples d'assemblages de tels profilés creux de structures de plateforme PF pour former cette armature.

Une partie support plane, destinée au roulage des véhicules et circulation des usagers, peut être montée sur l'armature susvisée pour former la plateforme en tant que telle.

Une armature à profilés est préférée, mais une structure de plateforme en matériau quelconque tel que du béton, peut être envisagée dès lors qu'elle inclut des piliers ou des moyens d'arrimage de ces piliers solidaires du reste de la structure. La demande de brevet FR2865666 propose une plateforme modulaire à base de modules en béton pouvant servir également de structure de plateforme dans le cadre de l'invention.

Selon l'invention, le module d'assemblage M1 comporte une structure d'ombrière O1 montée sur un ou plusieurs piliers P solidaires de la structure de plateforme PF. Il y a de préférence deux piliers P proches d'extrémités latérales du module d'assemblage M1.

En outre, la structure d'ombrière O1 peut comporter un ou plusieurs panneaux photovoltaïques PV associés à une installation électrique AE détaillée plus bas.

Alternativement ou en combinaison, la structure d'ombrière O1 peut comporter un ou plusieurs moyens de récupération par gravité d'eau (G) pour l'eau de la structure d'ombrière O1. Ces moyens permettent de recueillir de l'eau tombée sur la structure d'ombrière O1, notamment de l'eau de pluie ou de l'eau de nettoyage. Ces moyens de récupération seront détaillés plus bas.

Avantageusement, la structure d'ombrière O1 permet de prévoir des zones ombragées sur la plateforme PF, et ainsi limiter la pénibilité du personnel de déchèterie sur les plateformes PF d'une installation de déchèterie de type modulaire, lors de périodes de fort ensoleillement, tout en améliorant le confort d'accueil des usagers, et également protéger en extérieur de la plateforme, certains déchets déposés en bennes, et sensibles aux dégâts causés par l'eau de pluie.

En outre, l'assemblage de modules M1 incluant la structure d'ombrière O1 permet un montage facilité et en toute compatibilité avec le reste des éléments de type M2 ou M3 de l'installation de déchèterie, constituant ainsi un ensemble solidarisé à forte inertie, susceptible d'apporter une stabilité très forte compensant les effets des sollicitations du vent sur les ombrières. Cette stabilité est liée aux constituants des modules M1, M2, M3 et de la structure de plateforme PF, et leurs fixations. La mise en œuvre d'une telle stabilité ne nécessite pas d'être davantage détaillée au vu de l'état actuel des connaissances dans le domaine de la construction de ce type de structure.

Ainsi de façon principale, les panneaux photovoltaïques PV et la récupération d'eau de pluie permettent d'améliorer significativement l'impact écologique de l'installation de déchèterie, puisque l'énergie peut être utilisée sur place ou transmise dans un réseau électrique pour le voisinage, et l'eau de pluie peut être utilisée pour des nettoyages ou arrosages.

Dans l'invention, comme dans la variante préférée, les piliers P font partie intégrante de la structure de plateforme PF. Ils sont par exemple intégrés à l'armature formant la structure de plateforme PF. Ainsi, ils forment des montants constitutifs de la structure de plateforme PF. Cela permet d'avoir une bonne cohésion du module d'assemblage M1, apportant à l'ensemble solidarisé une forte inertie, susceptible d'apporter une stabilité très forte compensant les effets des sollicitations du vent sur les ombrières, et de monter rapidement la structure d'ombrière O1, en limitant le recours à d'autres corps de métier des bâtiments et travaux publics pour l'installation de la structure d'ombrière O1. En particulier, les piliers P sont intégrés dans l'épure globale du quai de déchetterie, sans dépassement de piliers sur la voirie extérieure. Cela permet d'éviter tout recours de voirie et réseau divers (VRD) extérieur, notamment la pose de piliers et supports extérieurs à l'emprise du quai, et donc ne gêne pas dans les enlèvements de bennes BC.

De préférence, les piliers P sont sous forme de profilés creux, plus préférentiellement métalliques. Ainsi, ils sont donc facilement intégrés à la structure de la plateforme et permettent d'avoir à la fois de la solidité et de la légèreté dans le montage.

Les piliers P supportent la structure d'ombrière O1. La structure d'ombrière O1 a de préférence une forme polygonale, par exemple carrée ou de préférence rectangulaire comme illustré dans les figures.

Dans la variante préférée, la structure d'ombrière O1 est agencée en deux volets assemblés par boulonnage de chaque côté d'une pièce centrale constituant une goulotte (G), l'ensemble se situant de part et d'autre dudit pilier P, le premier volet couvrant la structure de plateforme PF, le deuxième volet couvrant un bord de la structure de plateforme PF et une section de contrebas CB recevant une benne BC. En particulier, le deuxième volet couvre intégralement la benne BC lorsqu'elle est dans la section de contrebas CB. Avantageusement, l'ombrière permet également de protéger le contenu des bennes de collecte BC des écoulements d'eau ou de forts ensoleillements pouvant détériorer des matériaux à recycler, tels que le carton ou les composés électroniques.

Ainsi, chaque volet de la structure d'ombrière O1 est oblique de sorte à former une structure en entonnoir vers les piliers P.

De préférence, la structure d'ombrière O1 est configurée pour être disposée de manière oblique par rapport à l'horizontale et par rapport audit pilier P. A cet effet, le module d'assemblage M1 comporte de préférence une platine de maintien PM fixée à la structure d'ombrière O1 au niveau dudit pilier P, en particulier au milieu de la structure d'ombrière O1. En outre, des câbles de maintien qui sont en particulier des câbles de sustentation CM sont fixés à la platine de maintien PM et aux quatre extrémités de la structure d'ombrière O1. Les câbles de sustentation CM peuvent permettre une meilleure résistance aux intempéries, par exemple dans les sites ayant un risque cyclonique, ou compenser des surcharges liées par exemple à la neige.

La structure d'ombrière O1 peut également comporter des profilés creux, en particulier à des extrémités latérales. Ces profilés sont aisément montés sur les piliers P.

Selon un aspect particulier, la structure d'ombrière O1 est configurée pour coulisser, en particulier verticalement, le long des piliers P entre une position haute vers une extrémité supérieure des piliers P, et une position basse vers la structure de plateforme PF, plus particulièrement contre la structure de plateforme PF. Avantageusement, cela permet d'abaisser la structure d'ombrière O1 pour monter les panneaux photovoltaïques PV et des raccordements électriques à hauteur de la plateforme, et élever la structure d'ombrière O1 ensuite pour la fixer vers une extrémité supérieure des piliers P.

En particulier, la structure d'ombrière O1 est assemblée sur site en positionnant entre les piliers P d'abord, la pièce centrale constituant la goulotte G, puis en y boulonnant latéralement deux cadres porteurs extérieurs, puis en fixant les câbles de sustentation CM, et enfin en venant installer les panneaux photovoltaïques PV.

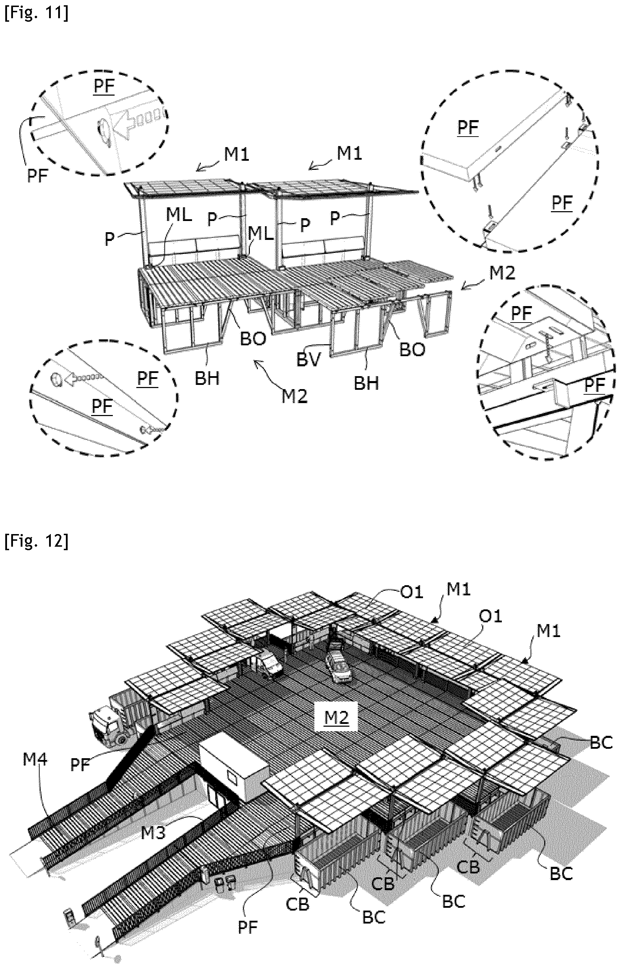

Dans la variante préférée, le module d'assemblage M1 comporte un mécanisme de levage de la structure d'ombrière O1. De préférence, le mécanisme de levage comprend au moins une poulie de levage PL, au moins un câble de levage CL et au moins un moyen d'actionnement ML, qui est de préférence un moteur de levage amovible ou non. Dans la variante illustrée, deux moteurs synchronisés pas à pas sont prévus proches des deux extrémités de la plateforme haute, au pied des piliers P pour permettre une levée horizontale parfaite de la structure d'ombrière O1 sans coincement oblique lors de la montée. Les deux moteurs ML synchronisés sont illustrés à la figure 11.

Au moins une poulie de levage PL peut être disposée vers une extrémité supérieure de pilier P, et coopérer avec le câble de levage CL et les moyens d'actionnement ML. Les moteurs d'actionnement peuvent être enclenchés au moins pour lever la structure d'ombrière O1.

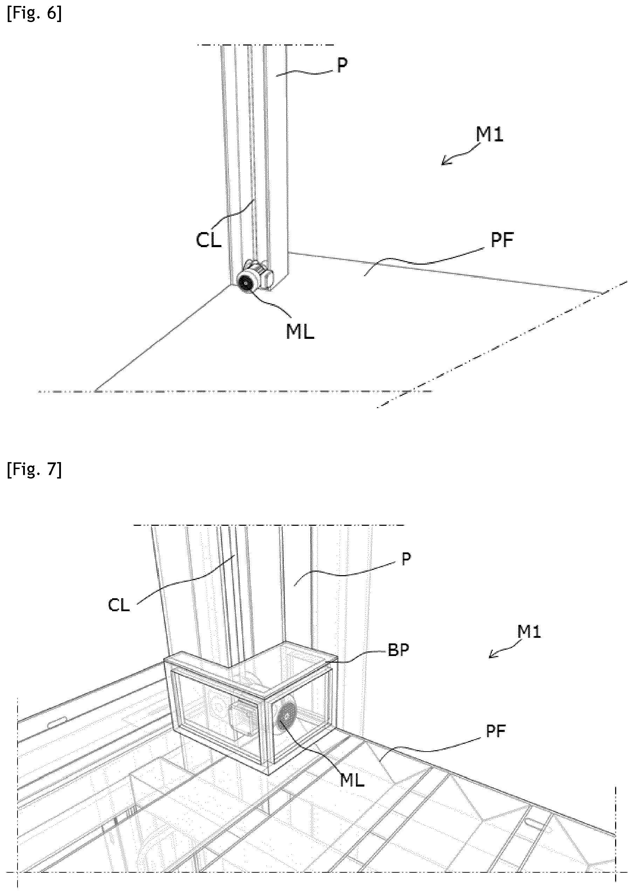

Dans une variante, les moteurs d'actionnement sont chacun protégé dans une caisse de protection BP pouvant être grillagée. Une telle caisse de protection est illustrée en figure 7.

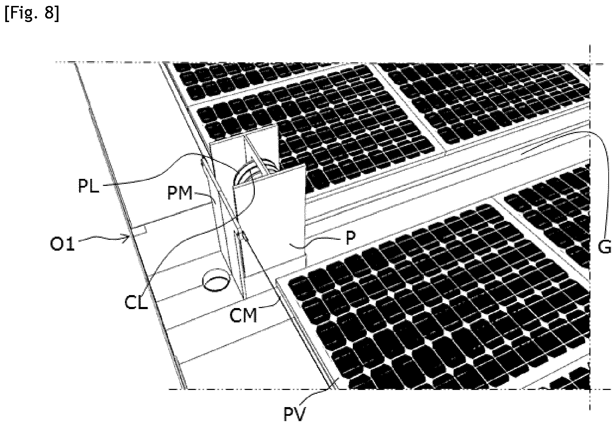

Dans la variante préférée, la structure d'ombrière O1 une fois relevée est fixée en position haute. Un moyen de fixation connu en lui-même peut être utilisé. On peut envisager une bride de fixation avec une protubérance coopérant avec le trou illustré en figure 8 sur la structure d'ombrière O1 en regard du pilier P.

Selon un autre aspect, les moyens de récupération d'eau comprennent une gouttière G associée à au moins une canalisation descendante de récupération CR. La gouttière G est en particulier au centre de la structure d'ombrière O1, entre les volets agencés en entonnoir et entre les piliers P. Dans la variante préférée, la gouttière G forme un cadre avec les piliers P.

De préférence, au moins une canalisation de pilier (non-représentée) parcourt au moins un des piliers P, et débouche dans la canalisation de récupération CR. La canalisation de récupération CR peut être connectée à une cuve de stockage CS. Avantageusement un grand nombre de cuves de stockage inter reliées peuvent être localisées sous le quai de déchèterie, ou une cuverie de stockage de grand volume recevant les eaux provenant de toutes les ombrières.

De préférence, la gouttière G est façonnée par pliage dans une pièce métallique de la structure d'ombrière O1 de forte épaisseur. Cette pièce de montage a une résistance mécanique permettant une bonne cohésion de la structure d'ombrière O1.

L'autre pilier P peut être parcouru par des câbles électriques reliant les panneaux photovoltaïques PV à une armoire électrique AE de préférence disposée sous un des modules d'assemblage M1. Séparer les câbles électriques des canalisations descendantes d'eau de pluie de pilier permet de limiter le risque de panne électrique.

Dans une variante préférée (non-représentée), le module d'assemblage comprend des moyens d'éclairage montés sur la structure d'ombrière O1. Ces moyens d'éclairage permettent d'éclairer le site de la déchèterie et la plateforme. En particulier, il s'agit d'au moins un dispositif à néon à LEDs disposé sensiblement à l'intérieur de la structure d'ombrière O1, à une face inférieure, par exemple au-dessus du quai pour éclairer la plateforme. On peut envisager, à la place ou de préférence en outre, au moins un projecteur par exemple à LEDs disposé vers la périphérie de la structure d'ombrière O1, par exemple pour éclairer le site de la déchetterie.

Avantageusement, cela permet d'éviter des installations de poteaux électriques, en périphérie du terrain de la déchèterie, eux même supposant l'enfouissement d'un réseau électrique en gaines sous la voirie. Au contraire, ces moyens d'éclairage peuvent être connectés au système électrique de la déchèterie via l'armoire électrique AE. Cela induit des économies de VRD significatives.

Plusieurs modules d'assemblage M1 peuvent être utilisés avec une armoire électrique AE commune. Il en est de même pour la cuve de stockage CS.

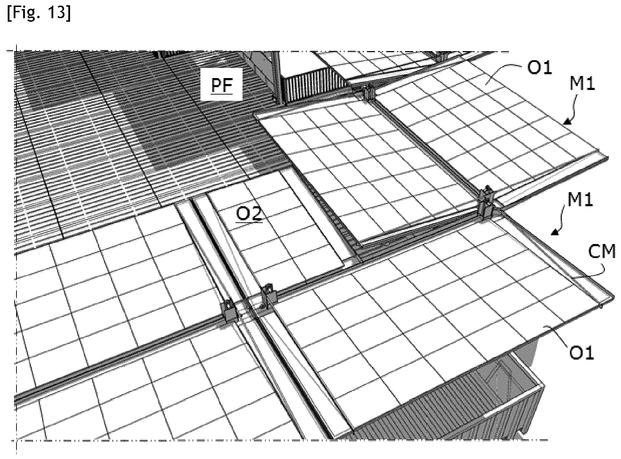

Une fois les modules d'assemblage M1 fixés ensemble, certaines structures d'ombrière O1 auront, en angle des installations, pour éviter un chevauchement empêchant l'une des ombrières de coulisser sur le pilier P. Cela peut être illustré par les figures 12 et 13. Ainsi, on peut prévoir une deuxième structure d'ombrière O2 similaire aux structures O1 décrites précédemment, mais ayant ses panneaux photovoltaïques PV en totalité de surface uniquement sur les parties exposées en extérieur. La deuxième structure d'ombrière O2 a une surface réduite de panneau sur l'intérieur évitant la superposition des deux surfaces et ne gênant pas la montée de l'ombrière concernée.

L'invention concerne en outre un kit de montage d'une installation de déchèterie, comprenant au moins un module d'assemblage M1 tel que décrit précédemment. Le module d'assemblage M1 est configuré pour être assemblé avec au moins un autre module d'assemblage du même type M1 et/ou au moins un autre module d'assemblage de type différent M2, M3 illustrés en figures 10 à 12. Ces modules d'assemblage de types différents M2, M3 sont similaires par la structure de plateforme PF, mais ils ne comportent pas de structure d'ombrière O1 ni de piliers porteurs P. Les figures 11 et 12 illustrent l'assemblage de modules M1, M2, mais un assemblage de ce type s'applique également au module M3. Le module M3 comporte une structure similaire à la structure de plateforme PF, mais sous forme de rampe pour accéder à la plateforme surélevée.

L'invention concerne en outre une installation de déchèterie comprenant au moins un module d'assemblage M1 tel que décrit précédemment, assemblé avec au moins un autre module d'assemblage du même type M1 et/ou au moins un autre module d'assemblage de type différent M2, M3.

Un autre objet de l'invention concerne un procédé de montage d'une installation de déchèterie, comprenant des étapes d'assemblage d'au moins un module d'assemblage M1 tel que décrit précédemment, avec au moins un autre module d'assemblage du même type M1 et/ou au moins un autre module d'assemblage de type différent M2, M3.

En particulier, le procédé d'assemblage comprend une étape pour prévoir ou fournir au moins un module d'assemblage M1 tel que décrit précédemment et de préférence au moins un module de type différent M2, M3 selon le plan d'installation considéré.

Le procédé comprend en outre une étape pour assembler les modules d'assemblage M1, M2, M3, puis une étape pour intégrer longitudinalement la pièce pliée constituant la gouttière G entre les deux piliers P et la fixer par une bride non représentée autours de chacun des piliers P, puis une étape pour assembler les deux volets, à hauteur de la plateforme PF, par boulonnage sur la pièce constituant la gouttière G, sur ses deux longueurs, chacun des deux volets constituant des cadres porteurs pour les capteurs photovoltaïques PV , l'assemblage constituant les ombrières 01 et 02, puis une étape pour monter les panneaux photovoltaïques PV et les câbles nécessaires ; puis une étape pour relever les structures d'ombrière O1, O2 ; et enfin une étape pour fixer les structures d'ombrière O1, O2 en position haute.

Plus généralement, le procédé comporte des étapes de mise en œuvre des différents éléments décrits précédemment.

Les avantages exposés ci-dessus s'appliquent mutatis mutandis.

## Revendications

1. Module d'assemblage (M1) pour une installation de déchèterie, le module d'assemblage (M1) comprenant une structure de plateforme (PF) surélevée, quel que soit son matériau constitutif, et des moyens d'assemblage configurés pour permettre l'assemblage de plusieurs modules d'assemblage (M1-M3) pour former une installation de déchèterie, **caractérisé en ce que** le module d'assemblage (M1) comporte une structure d'ombrière (O1, O2) montée sur un ou plusieurs piliers (P) solidaires de la structure de plateforme (PF), **en ce que** la structure d'ombrière (O1, O2) comporte
- un ou plusieurs panneaux photovoltaïques (PV) associés à une installation électrique (AE) pour récupérer de l'énergie électrique par voie photovoltaïque, et/ou
- un ou plusieurs moyens de récupération d'eau (G) pour récupérer de l'eau de pluie ou de nettoyage ruisselant sur la structure d'ombrière (O1, O2), et **en ce que** les moyens d'assemblage sont configurés pour former un assemblage des modules (M1-M3) solidarisé, à l'épreuve des effets des sollicitations du vent sur ladite structure d'ombrière (O1, O2).

2. Module d'assemblage (M1) selon la revendication précédente, **caractérisé en ce que** les piliers (P) sont sous forme de profilés creux ou en H.

3. Module d'assemblage (M1) selon l'une des revendications précédentes, **caractérisé en ce que** la structure de plateforme (PF) surélevée comporte des profilés creux métalliques (BH, BV, BO).

4. Module d'assemblage (M1) selon l'une des revendications précédentes, **caractérisé en ce que** la structure d'ombrière (O1, O2) est configurée pour coulisser le long des piliers (P), le module d'assemblage (M1) comportant un mécanisme de levage (PL, CL, ML) de la structure d'ombrière (O1, O2).

5. Module d'assemblage (M1) selon l'une des revendications précédentes, ayant deux piliers (P), **caractérisé en ce que** la structure d'ombrière (O1, O2) est agencée en deux volets situés de part et d'autre d'une goulotte centrale servant de gouttière (G), sur laquelle ils sont fixés, laquelle goulotte reliant longitudinalement les deux piliers (P), et coulissant verticalement le long des piliers, l'un des volets couvrant la structure de plateforme (PF), l'autre couvrant une section de contrebas (CB) recevant une benne (BC), et de préférence pour certaines structures d'ombrière (O2), situées en angle, l'un des volets présente une dimension et une surface inferieure évitant le chevauchement avec le volet en vis-à-vis d'une autre structure d'ombrière (O1) la plus proche.

6. Module d'assemblage (M1) selon l'une des revendications précédentes, **caractérisé en ce que** la structure d'ombrière (O1, O2) est configurée pour être disposée de manière oblique par rapport à l'horizontale et audit un ou plusieurs piliers (P), le module d'assemblage (M1) comportant une platine de maintien (PM) fixée à la structure d'ombrière (O1, O2) au niveau dudit un ou plusieurs piliers (P), et au moins un câble de maintien (CM) fixé à la platine de maintien (PM) et à au moins une extrémité de la structure d'ombrière (O1, O2).

7. Module d'assemblage (M1) selon l'une des revendications précédentes, **caractérisé en ce que** les moyens de récupération d'eau comprennent une ou ladite gouttière (G) au centre de la structure d'ombrière (O1, O2), associée à au moins une canalisation descendante de récupération (CR).

8. Module d'assemblage (M1) selon l'une des revendications précédentes, **caractérisé en ce qu'**il comprend des moyens d'éclairage montés sur la structure d'ombrière (O1, O2).

9. Kit de montage d'une installation de déchèterie, comprenant des modules d'assemblage (M1, M2, M3) incluant au moins un module d'assemblage (M1) selon l'une des revendications précédentes, configuré pour être assemblé avec au moins un autre module d'assemblage du même type (M1) et/ou au moins un autre module d'assemblage de type différent (M2, M3).

10. Installation de déchèterie comprenant des modules d'assemblage (M1, M2, M3) incluant au moins un module d'assemblage (M1) selon l'une des revendications 1 à 7, assemblé avec au moins un autre module d'assemblage du même type (M1) et/ou au moins un autre module d'assemblage de type différent (M2, M3).

11. Procédé de montage d'une installation de déchèterie, comprenant des étapes d'assemblage d'au moins un module d'assemblage (M1) selon l'une des revendications 1 à 7, avec au moins un autre module d'assemblage du même type (M1) et/ou au moins un autre module d'assemblage de type différent (M2, M3).

## Patentansprüche

1. Montagebaustein (M1) für eine Müllverwertungsanlage, wobei der Montagebaustein (M1) eine erhöhte Plattformstruktur (PF) unabhängig von ihrem Material und Montageeinrichtungen umfasst, die so konfiguriert sind, dass sie die Montage mehrerer Montagebausteine (M1-M3) zur Bildung einer Müllverwertungsanlage ermöglichen, **dadurch gekennzeichnet, dass** der Montagebaustein (M1) eine Überdachungsstruktur (O1, O2) umfasst, die auf einem oder mehreren Säulen (P) montiert ist und mit der Plattformstruktur (PF) verbunden ist, wobei die Überdachungsstruktur (O1, O2) umfasst:
- ein oder mehrere Photovoltaikpaneele (PV) verbunden mit einer elektrischen Installation (AE), um elektrische Energie durch Photovoltaik zu gewinnen, und/oder
- ein oder mehrere Wasserrückgewinnungsmittel (G), um Regenwasser oder Reinigungswasser, das auf die Überdachungsstruktur (O1, O2) fließt, aufzufangen,
und wobei die Montageeinrichtungen so konfiguriert sind, dass sie eine Montage der Bausteine (M1-M3) ermöglichen, die den Windkräften auf die Überdachungsstruktur (O1, O2) standhalten.

2. Montagebaustein (M1) nach dem vorhergehenden Anspruch, **dadurch gekennzeichnet, dass** die Säulen (P) in Form von Hohlprofilen oder H-Profilen ausgebildet sind.

3. Montagebaustein (M1) nach einem der vorhergehenden Ansprüche, **dadurch gekennzeichnet, dass** die erhöhte Plattformstruktur (PF) hohle Metallprofile (BH, BV, BO) umfasst.

4. Montagebaustein (M1) nach einem der vorhergehenden Ansprüche, **dadurch gekennzeichnet, dass** die Überdachungsstruktur (O1, O2) entlang der Säulen (P) gleiten kann, wobei der Montagebaustein (M1) einen Hebemechanismus (PL, CL, ML) für die Überdachungsstruktur (O1, O2) umfasst.

5. Montagebaustein (M1) nach einem der vorhergehenden Ansprüche, wobei zwei Säulen (P) vorhanden sind, **dadurch gekennzeichnet, dass** die Überdachungsstruktur (O1, O2) in zwei Flügel unterteilt ist, die sich auf beiden Seiten einer zentralen Dachrinne (G) befinden, an der sie befestigt sind, wobei diese Dachrinne die beiden Säulen (P) längs verbindet und entlang der Säulen vertikal gleiten kann, wobei einer der Flügel die Plattformstruktur (PF) bedeckt und der andere einen tiefer liegenden Bereich (CB) abdeckt, in dem ein Behälter (BC) untergebracht ist, und vorzugsweise für bestimmte Überdachungsstrukturen (O2), die in einem Winkel angeordnet sind, wobei einer der Flügel eine geringere Dimension und Fläche hat, um eine Überlappung mit dem gegenüberliegenden Flügel einer benachbarten Überdachungsstruktur (O1) zu vermeiden.

6. Montagebaustein (M1) nach einem der vorhergehenden Ansprüche, **dadurch gekennzeichnet, dass** die Überdachungsstruktur (O1, O2) schräg zur Horizontalen und zu einem oder mehreren der Säulen (P) angeordnet werden kann, wobei der Montagebaustein (M1) eine Halteplatte (PM) umfasst, die an der Überdachungsstruktur (O1, O2) an einem oder mehreren Säulen (P) befestigt ist, und mindestens ein Haltekabel (CM), das an der Halteplatte (PM) und an mindestens einem Ende der Überdachungsstruktur (O1, O2) befestigt ist.

7. Montagebaustein (M1) nach einem der vorhergehenden Ansprüche, **dadurch gekennzeichnet, dass** die Wasserrückgewinnungsmittel eine oder die zentrale Dachrinne (G) in der Mitte der Überdachungsstruktur (O1, O2) umfassen, die mit mindestens einer Abflussleitung (CR) verbunden ist.

8. Montagebaustein (M1) nach einem der vorhergehenden Ansprüche, **dadurch gekennzeichnet, dass** er Beleuchtungseinrichtungen umfasst, die an der Überdachungsstruktur (O1, O2) montiert sind.

9. Bausatz zur Montage einer Müllverwertungsanlage, umfassend Montagebausteine (M1, M2, M3), einschließlich mindestens eines Montagebausteins (M1) nach einem der vorhergehenden Ansprüche, der so konfiguriert ist, dass er mit mindestens einem anderen Montagebaustein desselben Typs (M1) und/oder mindestens einem anderen Montagebaustein eines anderen Typs (M2, M3) montiert werden kann.

10. Müllverwertungsanlage, umfassend Montagebausteine (M1, M2, M3), einschließlich mindestens eines Montagebausteins (M1) nach einem der Ansprüche 1 bis 7, montiert mit mindestens einem anderen Montagebaustein desselben Typs (M1) und/oder mindestens einem anderen Montagebaustein eines anderen Typs (M2, M3).

11. Verfahren zur Montage einer Müllverwertungsanlage, umfassend Schritte zum Zusammenbau von mindestens einem Montagebaustein (M1) nach einem der Ansprüche 1 bis 7 mit mindestens einem anderen Montagebaustein desselben Typs (M1) und/oder mindestens einem anderen Montagebaustein eines anderen Typs (M2, M3).

## Claims

1. Assembly module (M1) for a waste disposal facility, the assembly module (M1) comprising an elevated platform structure (PF), regardless of its constituent material, and assembly means configured to enable the assembly of multiple assembly modules (M1-M3) to form a waste disposal facility, **characterized in that** the assembly module (M1) includes a canopy structure (O1, O2) mounted on one or more pillars (P) integral with the platform structure (PF), **in that** the canopy structure (O1, O2) includes:
- one or more photovoltaic panels (PV) associated with an electrical installation (AE) to recover electrical energy by photovoltaic means, and/or
- one or more water collection means (G) to collect rainwater or cleaning water running off the canopy structure (O1, O2),
and **in that** the assembly means are configured to form an assembly of the modules (M1-M3) secured together, resistant to the effects of wind forces on said canopy structure (O1, O2).

2. Assembly module (M1) according to the preceding claim, **characterized in that** the pillars (P) are in the form of hollow or H-shaped profiles.

3. Assembly module (M1) according to any of the preceding claims, **characterized in that** the elevated platform structure (PF) includes hollow metal profiles (BH, BV, BO).

4. Assembly module (M1) according to any of the preceding claims, **characterized in that** the canopy structure (O1, O2) is configured to slide along the pillars (P), the assembly module (M1) including a lifting mechanism (PL, CL, ML) of the canopy structure (O1, O2).

5. Assembly module (M1) according to any of the preceding claims, having two pillars (P), **characterized in that** the canopy structure (O1, O2) is arranged in two panels located on either side of a central gutter (G) serving as a gutter, to which they are attached, the gutter longitudinally connecting the two pillars (P), and sliding vertically along the pillars, one of the panels covering the platform structure (PF), the other covering a lower section (CB) receiving a dumpster (BC), and preferably for certain canopy structures (O2), located at an angle, one of the panels has a smaller dimension and surface to avoid overlapping with the opposing panel of the nearest other canopy structure (O1).

6. Assembly module (M1) according to any of the preceding claims, **characterized in that** the canopy structure (O1, O2) is configured to be arranged obliquely in relation to the horizontal and to the said one or more pillars (P), the assembly module (M1) including a retaining plate (PM) fixed to the canopy structure (O1, O2) at the said one or more pillars (P), and at least one retaining cable (CM) fixed to the retaining plate (PM) and to at least one end of the canopy structure (O1, O2).

7. Assembly module (M1) according to any of the preceding claims, **characterized in that** the water collection means comprise one or the said gutter (G) in the center of the canopy structure (O1, O2), associated with at least one descending recovery pipeline (CR).

8. Assembly module (M1) according to any of the preceding claims, **characterized in that** it includes lighting means mounted on the canopy structure (O1, O2).

9. Kit for assembling a waste disposal facility, comprising assembly modules (M1, M2, M3) including at least one assembly module (M1) according to any of the preceding claims, configured to be assembled with at least one other assembly module of the same type (M1) and/or at least one other assembly module of a different type (M2, M3).

10. Waste disposal facility comprising assembly modules (M1, M2, M3) including at least one assembly module (M1) according to any of claims 1 to 7, assembled with at least one other assembly module of the same type (M1) and/or at least one other assembly module of a different type (M2, M3).

11. Method for assembling a waste disposal facility, comprising steps of assembling at least one assembly module (M1) according to any of claims 1 to 7, with at least one other assembly module of the same type (M1) and/or at least one other assembly module of a different type (M2, M3).
